# EUROPÄISCHE PATENTSCHRIFT

(11) **EP 0 760 015 B1**
(45) Veröffentlichungstag und Bekanntmachung des Hinweises auf die Patenterteilung: **28.02.2001**
(21) Anmeldenummer: 95919359.0
(22) Anmeldetag: 28.04.1995
(51) Int. Cl.: C14C 9/00

(54) **KATIONISCHE MITTEL ZUM FETTEN VON LEDERN UND PELZEN**
CATIONIC AGENTS FOR STUFFING LEATHER AND HIDES
AGENTS CATIONIQUES POUR NOURRIR DES CUIRS ET DES PEAUX

(30) Priorität: 06.05.1994 DE 4416111
(43) Veröffentlichungstag der Anmeldung: 05.03.1997
(73) Patentinhaber: Cognis Deutschland GmbH, 40589 Düsseldorf (DE)
(72) Erfinder: SEGURA, Ramon, E-08029 Barcelona (ES); AGUADO, Angel, E-08320 El Masnou (ES)
(86) Internationale Anmeldenummer: EP9501626
(87) Internationale Veröffentlichungsnummer: WO9530777

(56) Entgegenhaltungen:
- DE-A- 2 430 140
- GB-A- 1 140 520
- US-A- 4 104 175

## Beschreibung

Die Erfindung befindet sich auf dem Gebiet der Lederhilfsmittel und betrifft die Verwendung von speziellen kationischen Tensiden zur Herstellung von Fettungsmitteln für Leder und Pelze.

### Stand der Technik

Neben den Gerbstoffen sind Fettungsmittel die wichtigsten Hilfsmittel, um den Charakter von Leder zu prägen. Die Wirkung der Fettungsmittel kommt durch eine faserisolierende Schmierung und durch eine Hydrophobierung zustande. Durch Umhüllung der Lederfasem mit einem Fettfilm wird die gegenseitige Reibung verringert und demzufolge die Geschmeidigkeit und Dehnbarkeit des Gewebes verbessert. Das hat positive Auswirkungen auf die Reißfestigkeit des Leders, denn in einem dehnbaren Werkstoff richten sich viele Fasern bei Zugbeanspruchung in der Zugrichtung aus und setzen dann dem Zerreißen einen größeren Widerstand entgegen als dieselben Fasern innerhalb eines spröden Werkstoffes. Durch die Hydrophobierung werden darüber hinaus gerbende Effekte erzielt, da sie mit einer Verdrängung von Wasser aus der Haut verbunden ist. Als Lederfettungsmittel werden im allgemeinen pflanzliche und tierische Öle, Fette und Wachse eingesetzt, ferner die aus diesen Stoffen durch chemische Umwandlung gewonnenen Hydrolyse-, Sulfierungs-, Oxidations- und Härtungsprodukte und schließlich mineralische Fettungsmittel; im einzelnen:
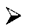 Die verseifbaren Fette und Öle sowie die natürlichen Wachse und Harze gehören zu den Estern. Unter Ölen und Fetten werden dabei vom Lederfachmann Ester aus Glycerin und Fettsäuren bezeichnet, die bei Raumtemperatur fest bzw. flüssig sind. Zur Lederfettung werden dabei aus der Gruppe der tierischen Fette insbesondere Trane, Fischöl, Rindertalg und Rinderklauenöl, aus der Gruppe der pflanzlichen Fette Rizinusöl, Rüböl und Leinöl herangezogen. In Wachsen und Harzen sind die Fettsäuren statt mit Glycerin mit höhermolekularen Alkoholen verestert. Beispiele für Wachse sind Bienenwachs, chinesisches Wachs, Caranubawachs, Montanwachs und Wollfett; zu den wichtigsten Harzen zählen Kolophonium, Juchtenöl und Schellack.
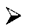 Durch chemische Umwandlung pflanzlicher und tierischer Fette erhält man Produkte, die wasserlöslich sind und die darüber hinaus in unterschiedlichem Maße emulgierend auf wasserunlösliche Fettstoffe wirken. Bekannt sind etwa die sulfierten wasserlöslichen Öle verschiedenster Art, die durch Oxidation veränderten Trane, die als Degras oder Moellon bezeichnet werden, ferner die Seifen, die bei der hydrolytischen Spaltung natürlicher Fette entstehen, gehärtete Fette sowie schließlich freie Fettsäuren wie Stearinsäure als Einbrennfette. Die meisten tierischen und pflanzlichen Fette weisen eine gewisse Affinität zur Ledersubstanz auf, die durch die Einführung oder Freilegung hydrophiler Gruppen noch beträchtlich gesteigert wird.
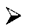 Wichtig für die Lederherstellung sind weiter die mineralischen Fettungsmittel. Diese Kohlenwasserstoffe sind den natürlichen Fetten und Ölen in manchen Eigenschaften ähnlich, lassen sich jedoch nicht verseifen. Es handelt sich um Fraktionen der Erdöldestillation, die in flüssiger Form Mineralöl, in pastöser Form Vaseline und in fester Form Paraffin genannt werden.

In vielen Fällen bilden sich jedoch auf der Oberfläche der gegerbten und gefetteten Leder im Laufe der Zeit unerwünschte Flecken, die als "Fettausschläge" (fatty spew) bezeichnet werden. Fettausschläge entstehen vornehmlich auf chromgegerbten Ledern nach kürzerer oder längerer Lagerung als weißer, oft schleierartiger Belag, der nur einzelne Stellen oder auch die ganze Lederfläche bedeckt. Der Ausschlag ist auf ein Austreten von festen Fettstoffen aus dem Leder zurückzuführen. Er kann durch das an sich im Leder vorhandene Naturfett oder durch Fettstoffe verursacht sein, die erst im Zuge der Fettung der Leder einverleibt worden sind. Zum Fetten von Leder benutzte Fettgemische neigen insbesondere dann zur Bildung von Ausschlag, wenn sie viel freie Fettsäuren enthalten. Freie Fettsäuren weisen im allgemeinen einen höheren Schmelzpunkt auf als ihre Glyceride. Die hydrolytische Spaltung von Fettstoffen bei der Lagerung des Leders erhöht entsprechend die Gefahr des Auftretens von Fettausschlägen. Seifen und Lickerfette werden in Chromleder, besonders in nicht genügend entsäuertem Chromleder, unter Freisetzen von Fettsäuren gespalten. Sulfierte Öle und Fette weisen eine unterschiedlich starke Neigung zur Bildung von Fettausschlägen auf, die Ausschlagsneigung geht mit längerer Lebensdauer im allgemeinen zurück [vgl. **J.Int.Soc.Leath.Trad.Chem. 47, 379 (1952)]**. Fettausschläge treten umso leichter auf, je mehr das Leder zur Ausschlagsbildung neigende Fettstoffe enthält. Für den Umfang und die Zusammensetzung des Ausschlags sind Menge, Zusammensetzung und Lage des im Leder vorhandenen Fettgemisches aus Naturfett und Lickerfett maßgebend. Locker strukturiertes Leder neigt weniger zur Ausschlagsbildung als Leder mit dichtem Fasergefüge. Fettausschläge werden bei niedrigen Temperaturen häufiger beobachtet als bei wärmeren Außentemperaturen.

Die kristallinen Fettausschläge entwickeln sich in den Haarlöchern und Drüsenkanälen, wobei zunächst kleine Kristalle in der Tiefe gebildet werden, die allmählich als größere Fettkristalle das ganze Haarloch ausfüllen, über die Lederoberfläche hinausquellen und zu einem dichten Kristallfilm verfilzen. Alle Fette, die Stearin- oder Palmitinderivate enthalten, können kristalline Fettausschläge verursachen, mit zunehmender Konzentration wird die Ausschlagsgefahr vergrößert **[Ledertechn.Rundsch. 1 (1949)]**. Insbesondere neigen die sogenannten Neutralfette, d.h. solche zur Lederfettung geeigneten Substanzen, die keine ionischen Gruppen im Molekül enthalten, z.B. Fette, Wachse und Kohlenwasserstoffe, zur Bildung von Fettausschlägen. Besonders kritisch sind dabei diejenigen Neutralfette, die Stearin- und/oder Palmitinderivate darstellen, wie etwa entsprechende Triglyceride oder die freien Fettsäuren. Da im Zuge der Lederverarbeitung, jedoch nach dem Gerben, ohnehin als nahezu obligatorischer Arbeitsgang eine Fettung erforderlich ist, um die angestrebten Produkteigenschaften zu erreichen, ist es in der Praxis üblich geworden, mit speziellen synthetischen Fettungsmitteln zu arbeiten, deren Neigung zur Bildung von Fettausschlag gering ist.

Eine in dieser Hinsicht üblicherweise eingesetzte Klasse von Fettungsmitteln sind halogenierte Verbindungen wie Chlorkohlenwasserstoffe. Die steigenden ökologischen und toxikologischen Anforderungen an Mittel, die in die Umwelt gelangen, bzw. mit denen der Verbraucher in Berührung kommt, machen jedoch diese Substanzklasse zunehmend unattraktiv. Neben anionischen Tensiden wie beispielsweise sulfierten Fetten und Ölen oder Sulfosuccinaten haben auch kationische Verbindungen wie beispielsweise das Dimethyldistearylammoniumchlorid als Fettungsmittel Bedeutung. Eine Übersicht zu diesem Thema von S.Gupta findet sich in **J.Am.Leath.Chem.Ass. 83, 239 (1988)**. Kationische Tenside sind jedoch aus ökologischen Gründen in der Diskussion, außerdem ist bekannt, daß sie sich in der Regel nicht gemeinsam mit anionischen Tensiden einsetzen lassen, da es sonst zur Ausfällung von Salzen auf der Lederoberfläche kommt. Im übrigen sind ihre anwendungstechnischen Eigenschaften nicht in allen Fällen zufriedenstellend.

Die komplexe Aufgabe der Erfindung hat somit darin bestanden, neue Fettungsmittel für Leder und Pelze auf Basis kationischer Tenside zu entwickeln, die sich durch verbesserte ökologische und anwendungstechnische Eigenschaften wie z.B. angenehmeren Griff und geringere Tendenz zu Fettaustrübungen auszeichnen.

### Beschreibung der Erfindung

Gegenstand der Erfindung ist die Verwendung von Esterquats als kationische Tenside zur Herstellung von Mitteln zum Fetten von Ledern und Pelzen.

Überraschenderweise wurde gefunden, daß Esterquats nicht nur über eine gegenüber konventionellen kationischen Tensiden vorteilhafte ökotoxikologische Verträglichkeit verfügen, sondern Ledern auch eine verbesserte Schmalzig- bzw. Geschmeidigkeit, einen angenehmeren Griff sowie eine erhöhte Hydrophobierung verleihen. Gleichzeitig wird eine geringere Tendenz zur Bildung unerwünschter Fettausschläge beobachtet.

### Esterquats

Unter der Bezeichnung Esterquats werden im allgemeinen quaternierte Fettsäuretriethanolaminestersalze verstanden. Es handelt sich dabei um bekannte Stoffe, die man nach den einschlägigen Methoden der präparativen organischen Chemie erhalten kann. In diesem Zusammenhang sei auf die Internationale Patentanmeldung **WO 91/01295** (Henkel) verwiesen, nach der man Triethanolamin in Gegenwart von unterphosphoriger Säure mit Fettsäuren partiell verestert, Luft durchleitet und anschließend mit Dimethylsulfat oder Ethylenoxid quatemiert. Stellvertretend für den umfangreichen Stand der Technik sei an dieser Stelle auf die Druckschriften **US 3915867, US 4370272, EP-A2 0239910, EP-A2 0293955, EP-A2 0295739 und EP-A2 0309052** verwiesen. Die quatemierten Fettsäuretriethanolaminestersalze folgen der Formel **(I)** 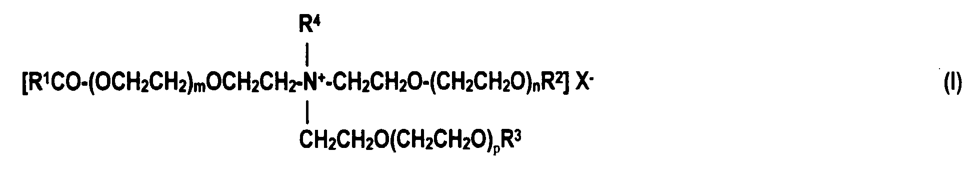 in der R¹CO für einen Acylrest mit 6 bis 22 Kohlenstoffatomen, R² und R³ unabhängig voneinander für Wasserstoff oder R¹CO, R⁴ für einen Alkylrest mit 1 bis 4 Kohlenstoffatomen oder eine (CH₂CH₂O)_{q}H-Gruppe, m, n und p in Summe für 0 oder Zahlen von 1 bis 12, q für Zahlen von 1 bis 12 und X für Halogenid, Alkylsulfat oder Alkylphosphat steht. Typische Beispiele für Esterquats, die im Sinne der Erfindung Verwendung finden können, sind Produkte auf Basis von Capronsäure, Caprylsäure, Caprinsäure, Laurinsäure, Myristinsäure, Palmitinsäure, Isostearinsäure, Stearinsäure, Ölsäure, Elaidinsäure, Arachinsäure, Behensäure und Erucasäure sowie deren technische Mischungen, wie sie beispielsweise bei der Druckspaltung natürlicher Fette und Öle anfallen. Vorzugsweise werden technische C_{12/18}-Kokosfettsäuren und insbesondere teilgehärtete C_{16/18}-Talg- bzw. Palmfettsäuren sowie elaidinsäurereiche C_{16/18}-Fettsäureschnitte eingesetzt. Zur Herstellung der quaternierten Ester können die Fettsäuren und das Triethanolamin im molaren Verhältnis von 1,1 : 1 bis 3 : 1 eingesetzt werden. Im Hinblick auf die anwendungstechnischen Eigenschaften der Esterquats hat sich ein Einsatzverhältnis von 1,2 : 1 bis 2,2 : 1, vorzugsweise 1,5 : 1 bis 1,9 : 1 als besonders vorteilhaft erwiesen. Die bevorzugten Esterquats stellen technische Mischungen von Mono-, Di- und Triestem mit einem durchschnittlichen Veresterungsgrad von 1,5 bis 1,9 dar und leiten sich von technischer C_{16/18}-Talg- bzw. Palmfettsäure (lodzahl 0 bis 40) ab. Aus anwendungstechnischer Sicht haben sich quaternierte Fettsäuretriethanolaminestersalze der Formel (I) als besonders vorteilhaft erwiesen, in der R¹CO für einen Acylrest mit 16 bis 18 Kohlenstoffatomen, R² für R¹CO, R³ für Wasserstoff, R⁴ für eine Methylgruppe, m, n und p für 0 und X für Methylsulfat steht. Neben den quaternierten Fettsäuretriethanolaminestersalzen kommen als Esterquats ferner auch quaternierte Estersalze von Fettsäuren mit Diethanolalkylaminen der Formel **(II)** in Betracht, 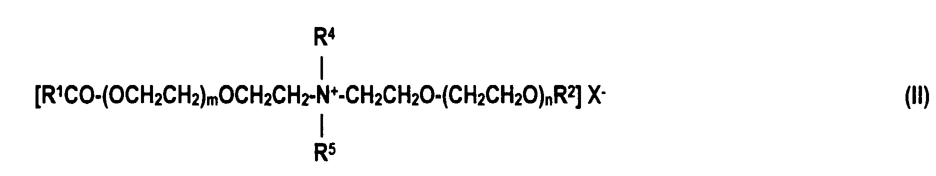 in der R¹CO für einen Acylrest mit 6 bis 22 Kohlenstoffatomen, R² für Wasserstoff oder R¹CO, R⁴ und R⁵ unabhängig voneinander für Alkylreste mit 1 bis 4 Kohlenstoffatomen, m und n in Summe für 0 oder Zahlen von 1 bis 12 und X für Halogenid, Alkylsulfat oder Alkylphosphat steht. Als weitere Gruppe geeigneter Esterquats sind schließlich die quaternierten Estersalze von Fettsäuren mit 1,2-Dihydroxypropyldialkylaminen der Formel **(III)** zu nennen, 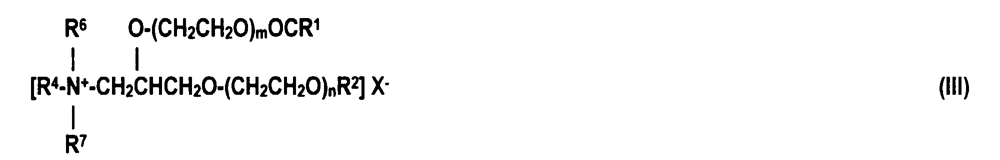 in der R¹CO für einen Acylrest mit 6 bis 22 Kohlenstoffatomen, R² für Wasserstoff oder R¹CO, R⁴, R⁶ und R⁷ unabhängig voneinander für Alkylreste mit 1 bis 4 Kohlenstoffatomen, m und n in Summe für 0 oder Zahlen von 1 bis 12 und X für Halogenid, Alkylsulfat oder Alkylphosphat steht. Hinsichtlich der Auswahl der bevorzugten Fettsäuren und des optimalen Veresterungsgrades gelten die für **(I)** genannten Beispiele auch für die Esterquats der Formeln **(II)** und **(III)**. Üblicherweise gelangen die Esterquats in Form 50 bis 90 Gew.-%iger alkoholischer Lösungen in den Handel, die bei Bedarf problemlos mit Wasser verdünnt werden können.

### Cotenside

Die Erfindung schließt die Erkenntnis ein, daß sich insbesondere Esterquats, die über Ethylenoxid-Einheiten verfügen, auch zusammen mit anderen nichtionischen, amphoteren bzw. zwitterionischen und vorzugsweise anionischen Tensiden einsetzen lassen, ohne daß es zur Bildung von unerwünschten salzartigen Niederschlägen auf der Lederoberfläche kommt. Typische Beispiele für **anionische Tenside** sind Alkylbenzolsulfonate, Alkansulfonate, Olefinsulfonate, Alkylethersulfonate, Glycerinethersulfonate, α-Methylestersulfonate, Sulfofettsäuren, Alkylsulfate, Fettalkoholethersulfate, Glycerinethersulfate, Hydroxymischethersulfate, Monoglycerid(ether)sulfate, Fettsäureamid(ether)sulfate, Mono- und Dialkylsulfosuccinate, Mono- und Dialkylsulfosuccinamate, Sulfotriglyceride, Amidseifen, Ethercarbonsäuren und deren Salze, Fettsäureisethionate, Fettsäuresarcosinate, Fettsäuretauride, Acyllactylate, Alkyloligoglucosidsulfate und Alkyl(ether)phosphate. Sofern die anionischen Tenside Polyglycoletherketten enthalten, können sie eine konventionelle, vorzugsweise jedoch eine eingeengte Homologenverteilung aufweisen. Typische Beispiele für **nichtionische Tenside sind** Fettalkoholpolyglycolether, Alkylphenolpolyglycolether, Fettsäurepoiyglycolester, Fettsäureamidpolygylcolether, Fettaminpolyglycolether, alkoxylierte Triglyceride, Alk(en)yloligoglykoside, Fettsäure-N-alkylglucamide, Polyolfettsäureester, Zuckerester, Sorbitanester und Polysorbate. Sofern die nichtionischen Tenside Polyglycoletherketten enthalten, können sie eine konventionelle, vorzugsweise jedoch eine eingeengte Homologenverteilung aufweisen. Typische Beispiele für **amphotere bzw. zwitterionische Tenside** sind Alkylbetaine, Alkylamidobetaine, Aminopropionate, Aminoglycinate, Imidazoliniumbetaine und Sulfobetaine. Bei den genannten Tensiden handelt es sich ausschließlich um bekannte Verbindungen. Hinsichtlich Struktur und Herstellung dieser Stoffe sei auf einschlägige Übersichtsarbeiten beispielsweise **J.Falbe (ed.), "Surfactants in Consumer Products", Springer Verlag, Berlin, 1987, S.54-124** oder **J.Falbe (ed.), "Katalysatoren, Tenside und Mineralöladditive", Thieme Verlag, Stuttgart, 1978, S.123.217** verwiesen.

### Fettungsmittel

Die Fettungsmittel können neben Esterquats und anderen Tensiden weitere gebräuchliche Hilfs- und Zusatzstoffe enthalten. Üblicherweise beträgt der Anteil der Esterquats an den erfindungsgemäßen Mitteln 15 bis 90 und vorzugsweise 20 bis 80 Gew.-% bezogen auf die Mittel. In der Regel werden die Mittel so dosiert, daß auf 1 kg Leder bzw. Pelz (berechnet als Falzgewicht) 20 bis 1000, vorzugsweise 30 bis 80 g des Mittels entfallen.

### Beispiele

**Beispiel 1.** Herstellung von Schafbekleidungsleder. Wet blue-Material wurde zunächst gewaschen und anschließend nachgegerbt. Die Angaben zu Einsatzmengen und Zeitdauer der Verfahrensschritte sind in Tabelle 1 zusammengefaßt. Es wurde ein weiches Leder mit vollem, rundem Griff und gleichmäßiger, blumiger Färbung erhalten.

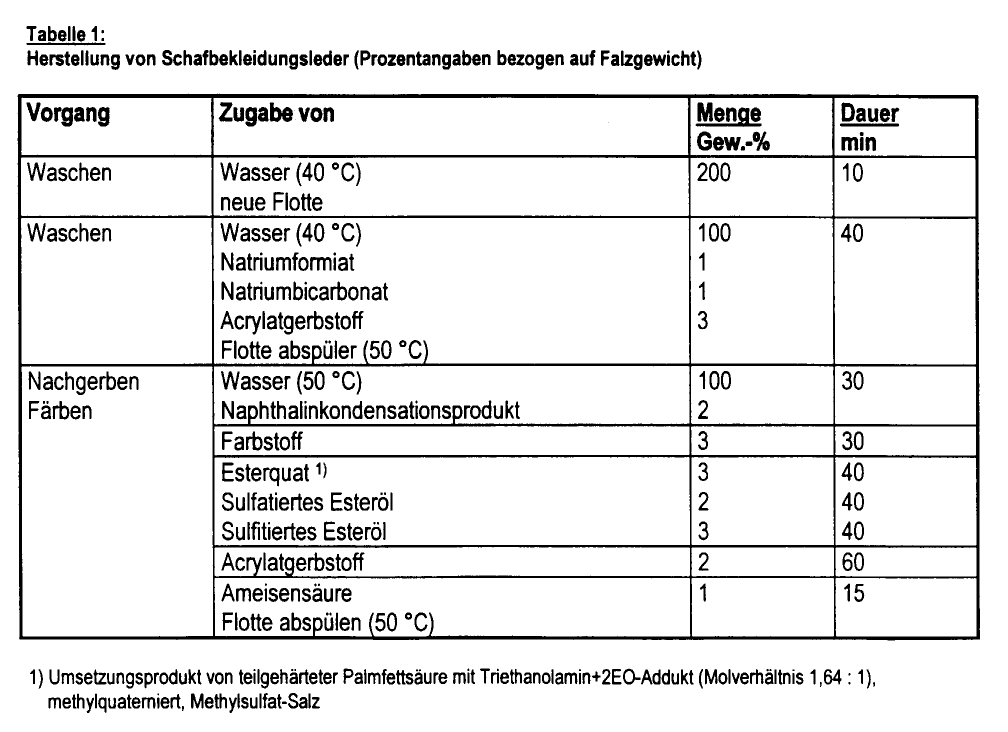

**Beispiel 2.** Herstellung von Möbelleder. Wet blue-Material wurde gewaschen, nachgegerbt, neutralisiert, gefärbt und gefettet. Die Angaben zu Einsatzmengen und Zeitdauer der Verfahrensschritte sind in Tabelle 2 zusammengefaßt. Es wurden tuchweiche, mollige, leicht schmalzige Möbelleder erhalten.

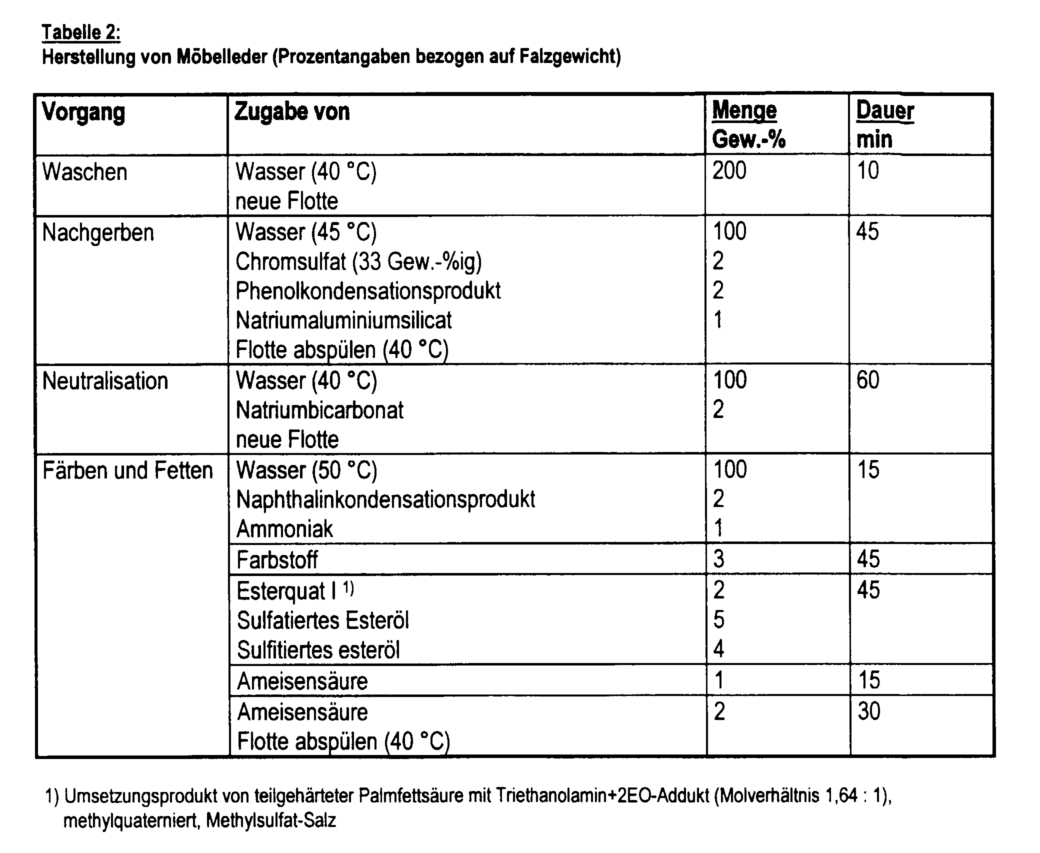

**Beispiel 3.** Herstellung von Rindvelour. Crustleder wurde broschiert und gefärbt. Die Angaben zu Einsatzmengen und Zeitdauer der Verfahrensschritte sind in Tabelle 3 zusammengefaßt. Es wurde eine seidige Velourlederfaser mit brillanter Färbung und schönem Schreibeffekt erhalten.

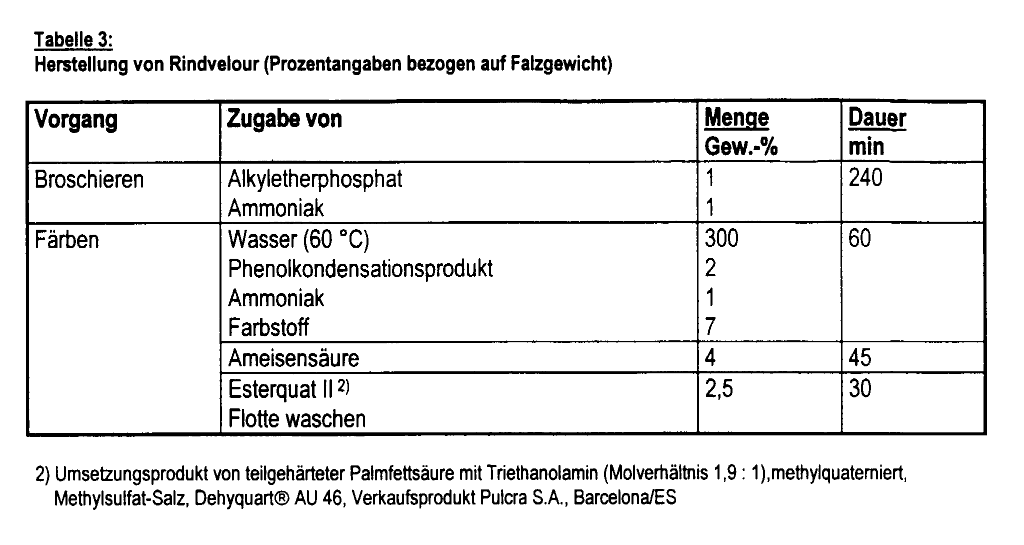

**Beispiel 4.** Herstellung von Rindoberleder. Wet blue-Material wurde gewaschen, neutralisiert, abermals gewaschen und nachgegerbt. Die Angaben zu Einsatzmengen und Zeitdauer der Verfahrensschritte sind in Tabelle 4 zusammengefaßt. Es wurde ein sehr weiches Leder mit guter Fülle und gleichmäßiger, brillanter Färbung erhalten.

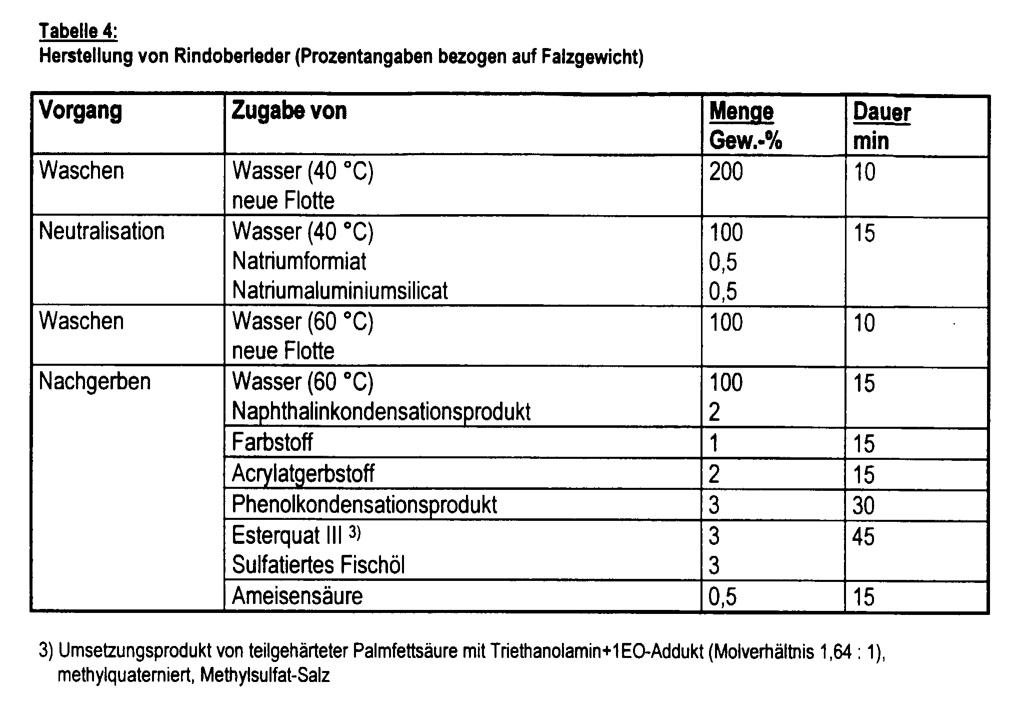

**Vergleichsbeispiele V1 bis V4.** Die Beispiele 1 bis 4 wurden wiederholt, anstelle der verschiedenen Esterquat-Typen jedoch Dimethyldistearylammoniumchlorid eingesetzt. Die resultierenden Leder wiesen einen deutlich härteren Griff und eine geringere Schmalzigkeit auf. Zudem wurden Ausfällungen auf der Oberfläche beobachtet.

## Patentansprüche

1. Verwendung von Esterquats als kationische Tenside zur Herstellung von Mitteln zum Fetten von Ledern und Pelzen.

2. Verwendung nach Anspruch 1, **dadurch gekennzeichnet,** daß man Esterquats der Formel **(I)** einsetzt, 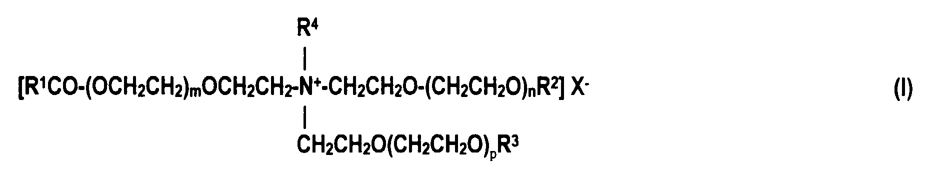 in der R¹CO für einen Acylrest mit 6 bis 22 Kohlenstoffatomen, R² und R³ unabhängig voneinander für Wasserstoff oder R¹CO, R⁴ für einen Alkylrest mit 1 bis 4 Kohlenstoffatomen oder eine (CH₂CH₂O)_{q}H-Gruppe, m, n und p in Summe für 0 oder Zahlen von 1 bis 12, q für Zahlen von 1 bis 12 und X für Halogenid, Alkylsulfat oder Alkylphosphat steht.

3. Verwendung nach Anspruch 1, **dadurch gekennzeichnet,** daß man Esterquats der Formel **(II)** einsetzt, 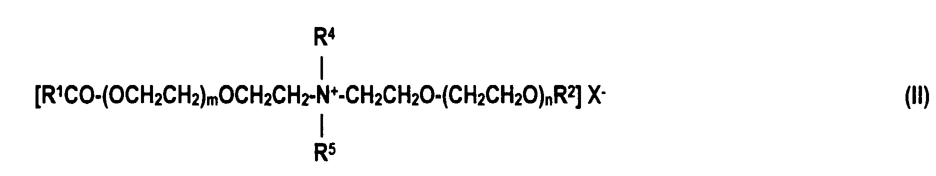 in der R¹CO für einen Acylrest mit 6 bis 22 Kohlenstoffatomen, R² für Wasserstoff oder R¹CO, R⁴ und R⁵ unabhängig voneinander für Alkylreste mit 1 bis 4 Kohlenstoffatomen, m und n in Summe für 0 oder Zahlen von 1 bis 12 und X für Halogenid, Alkylsulfat oder Alkylphosphat steht.

4. Verwendung nach Anspruch 1, **dadurch gekennzeichnet,** daß man Esterquats der Formel **(III)** einsetzt, 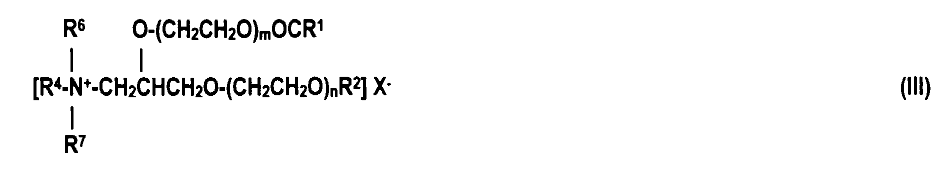 in der R¹CO für einen Acylrest mit 6 bis 22 Kohlenstoffatomen, R² für Wasserstoff oder R¹CO, R⁴, R⁶ und R⁷ unabhängig voneinander für Alkylreste mit 1 bis 4 Kohlenstoffatomen, m und n in Summe für 0 oder Zahlen von 1 bis 12 und X für Halogenid, Alkylsulfat oder Alkylphosphat steht.

## Claims

1. The use of esterquats as cationic surfactants for the production of formulations for oiling leathers and skins.

2. The use claimed in claim 1, characterized in that esterquats corresponding to formula **(I)**: 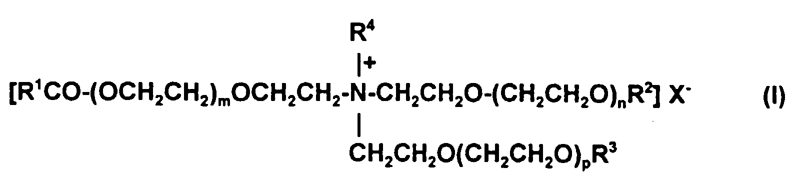 in which R¹CO is an acyl radical containing 6 to 22 carbon atoms, R² and R³ independently of one another represent hydrogen or have the same meaning as R¹CO, R⁴ is an alkyl radical containing 1 to 4 carbon atoms or a (CH₂-CH₂O)_{q}H group, m, n and p together represent 0 or numbers of 1 to 12, q is a number of 1 to 12 and X is halide, alkyl sulfate or alkyl phosphate, are used.

3. The use claimed in claim 1, characterized in that esterquats corresponding to formula **(II)**: 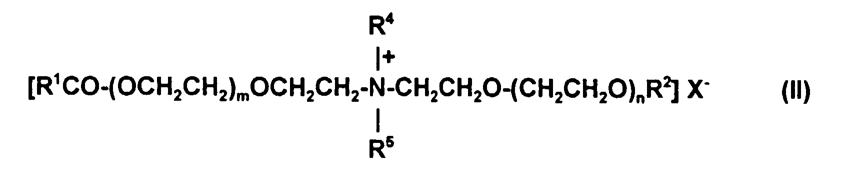 in which R¹CO is an acyl radical containing 6 to 22 carbon atoms, R² is hydrogen or has the same meaning as R¹CO, R⁴ and R⁵ independently of one another represent alkyl radicals containing 1 to 4 carbon atoms m and n together are 0 or numbers of 1 to 12 and X stands for halide, alkyl sulfate or alkyl phosphate,
are used.

4. The use claimed in claim 1, characterized in that esterquats corresponding to formula **(III)**: 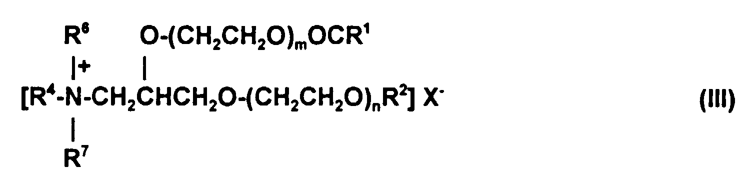 in which R¹CO is an acyl radical containing 6 to 22 carbon atoms, R² is hydrogen or has the same meaning as R¹CO, R⁴, R⁶ and R⁷ independently of one another represent alkyl radicals containing 1 to 4 carbon atoms, m and n together are 0 or numbers of 1 to 12 and X stands for halide, alkyl sulfate or alkyl phosphate,
are used.

## Revendications

1. Utilisation d'esterquats comme agents tensioactifs cationiques pour la production d'agents pour nourrir des cuirs et des peaux.

2. Utilisation selon la revendication 1,
caractérisée en ce qu'
on utilise des esterquats de formule (I) 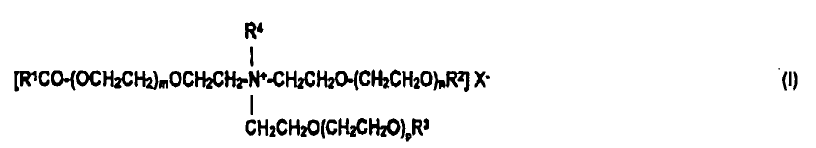 dans laquelle R¹CO représente un radical acyle ayant de 6 à 22 atomes de carbone, R² et R³ représentent indépendamment l'un de l'autre un hydrogène ou R¹CO, R⁴ représente un radical alkyle ayant de 1 à 4 atomes de carbone ou un groupe (CH₂CH₂O)_{q}H, m, n et p valent au total 0 ou des nombres allant de 1 à 12, q représente des nombres de 1 à 12, et X représente un halogénure, un sulfate d'alkyle ou un phosphate d'alkyle.

3. Utilisation selon la revendication 1,
caractérisée en ce qu'
on utilise des esterquats de formule (II) 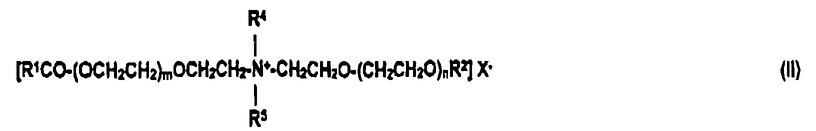 dans laquelle R¹CO représente un radical acyle comportant de 6 à 22 atomes de carbone, R² représente un hydrogène ou R¹CO, R⁴ et R⁵ représentent indépendamment l'un de l'autre des radicaux alkyles comportant de 1 à 4 atomes de carbone, m et n valent au total 0 ou des nombres allant de 1 à 12, et X représente un halogénure, un sulfate d'alkyle ou un phosphate d'alkyle.

4. Utilisation selon la revendication 1,
caractérisée en ce qu'
on utilise des esterquats de formule (III) 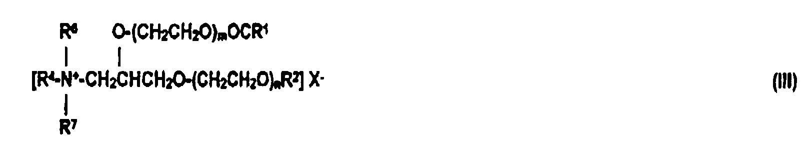 dans laquelle R¹CO représente un radical acyle comportant de 6 à 22 atomes de carbone, R² représente un hydrogène ou R¹CO, R⁴, R⁶ et R⁷ représentent indépendamment l'un de l'autre des radicaux alkyles comportant de 1 à 4 atomes de carbone, m et n valent au total 0 ou des nombres allant de 1 à 12, et X représente un halogénure, un sulfate d'alkyle ou un phosphate d'alkyle.
